# FASCICULE DE BREVET EUROPEEN

(11) **EP 2 573 338 B1**
(45) Date de publication et mention de la délivrance du brevet: **19.07.2017**
(21) Numéro de dépôt: 11181908.2
(22) Date de dépôt: 20.09.2011
(51) Int. Cl.: F01M 11/12, F16N 29/04

(54) **Contrôle du sur-remplissage d'un système de lubrification d'un moteur d'aéronef**
Überfüllungskontrolle eines Schmiersystems für einen Flugzeugmotor
Overfill control of an aircraft engine lubrication system

(43) Date de publication de la demande: 27.03.2013
(73) Titulaire: Safran Aero Boosters SA, 4041 Herstal (BE)
(72) Inventeur: Cornet, Albert, 4800 Verviers (BE)
(74) Mandataire: Lecomte & Partners

(56) Documents cités:
- EP-A2- 0 102 080
- WO-A1-2011/131892
- US-A- 5 687 687

## Description

### Domaine technique

L'invention a trait à une unité de contrôle de niveau d'huile d'un système de lubrification d'un moteur, préférentiellement d'un moteur d'aéronef, le système de lubrification comprenant un réservoir. L'invention a trait également à un système de lubrification d'un moteur, à un moteur équipé d'un système de lubrification, ainsi qu'à un procédé de contrôle de niveau d'huile d'un système de lubrification.

### Technique antérieure

De nombreuses machines et plus particulièrement les moteurs à combustion sont habituellement équipés d'un système de lubrification. Ces systèmes de lubrification comprennent essentiellement un réservoir d'huile, au moins une pompe de circulation ou d'alimentation de l'huile et éventuellement des conduites d'amenée de l'huile aux différents endroits requérant une lubrification, tels que notamment des paliers.

Un sur-remplissage peut conduire à un débordement du réservoir d'huile et provoquer un passage de l'huile dans une enceinte du moteur via une conduite d'évacuation des vapeurs d'huile. Cette situation peut notamment être causée par un remplissage excessif lors d'une maintenance. Dans le cas de moteur d'aéronef, elle peut également être causée par le passage de carburant dans le circuit de lubrification en cas de défaillance au niveau de l'échangeur de chaleur entre le carburant et le circuit de lubrification. Dans les moteurs d'aéronef, l'huile est en effet souvent refroidie au moyen du carburant. En raison de la pression de carburant qui est habituellement supérieure à celle de l'huile, en cas de défaillance dudit échangeur de chaleur, du carburant peut alors nourrir le circuit de lubrification et conduire à un sur-remplissage dudit circuit. Cette situation est communément désignée par l'expression anglo-saxonne « Fuel-in-Oil ». Une augmentation du volume du liquide de lubrification correspondant à un sur-remplissage peut conduire à des défaillances majeures du moteur, en particulier lorsque cette situation se prolonge au-delà d'une certaine durée. Cette défaillance est difficile à détecter avec les systèmes habituels de mesure du niveau de réservoir en raison, d'une part, de la faible précision de ces systèmes et, d'autre part, de la faible différence entre le niveau normal à l'arrêt et le débordement. Cette situation peut par conséquent entrainer de nombreuses fausses alarmes, notamment à l'arrêt du moteur.

Dans la plupart des moteurs, le système de lubrification présente la particularité de comprendre une ou plusieurs pompes à huile et des canalisations qui lubrifient de manière ponctuelle les différents éléments nécessitant une lubrification. Parmi ces moteurs, on distingue les moteurs dits à carter sec et les moteurs dits à carter humide. Dans les moteurs à carter humide, l'huile est contenue dans le carter moteur et collectée dans ce dernier par ruissellement le long des parois du moteur, par opposition aux moteurs à carter sec où l'huile est collectée par des pompes de récupération. Les systèmes de lubrification des moteurs sont par conséquent amenés à « consommer » une fraction du volume d'huile disponible en remplissant les canalisations lorsque le moteur fonctionne, cette fraction étant ensuite restituée au carter ou réservoir lorsque le moteur est arrêté. Ce phénomène est dénommé « gulping » et est d'autant plus marqué pour les moteurs à carter sec qui comprennent des pompes de récupération et davantage de canalisations.

Les moteurs d'aéronef sont habituellement du type à carter sec, à savoir qu'ils comprennent un système de lubrification spécifique avec un réservoir de maintien d'un volume d'huile de travail et de récupération de l'huile disséminée dans le moteur lorsque celui-ci est en fonctionnement.

Une solution connue au problème de sur-remplissage et de débordement consécutif à un sur-remplissage consiste à sur dimensionner le réservoir et à prévoir diverses mesures de design destinées à faire face aux conséquences d'une surpression et/ou d'un débordement. Ces mesures sont cependant coûteuses et imparfaites dans la mesure où elles ne résolvent pas véritablement le problème.

Le document de brevet US 5,578,997 a trait à un dispositif de détection de vapeur de carburant dans l'huile de lubrification d'un moteur d'aéronef à réaction. Il aborde par conséquent la problématique de passage de carburant dans le circuit de lubrification en cas de défaillance au niveau de l'échangeur de chaleur entre le carburant et le circuit de lubrification, dite « Fuel-in-Oil ». L'enseignement susmentionné divulgue un dispositif électromécanique apte à détecter la présence de vapeur de carburant dans l'huile de lubrification. Il consiste essentiellement en une chambre disposée dans le réservoir, la chambre comprenant un piston et une cartouche disposée entre le piston et le fond de la chambre, la cartouche comprenant un matériau apte à réagir chimiquement de manière exothermique, et par conséquent à se dilater, en présence de vapeurs de carburant. En présence de vapeur de carburant, la cartouche déplace alors le piston qui lui-même actionne un interrupteur d'un circuit d'alarme. La solution proposée dans cet enseignement est intéressante mais présente plusieurs inconvénients. Parmi ceux-ci on compte le fait que le matériau de la cartouche doit être remplacé une fois qu'il a réagi, ainsi que le coût de production et de maintenance du dispositif de sécurité.

Le document de brevet EP 0 515 326 A1 divulgue un dispositif de mise à niveau automatique de l'huile de lubrification d'un véhicule à moteur alternatif. Ce dispositif est essentiellement destiné à des véhicules commerciaux sujets à des taux d'utilisation fort élevés. Ce dispositif comprend essentiellement une pompe de remplissage d'huile commandée par des capteurs de niveau haut et de niveau bas du carter du moteur. Une constante de temps T₂ est associée à l'état haut du capteur de niveau haut et ce capteur sert notamment à stopper la pompe de remplissage destinée à compenser les pertes d'huile du moteur. Ce dispositif de mise à niveau est réputé pouvoir fonctionner dans toutes les conditions de fonctionnement du véhicule, notamment aussi lorsque le moteur tourne. Cet enseignement est cependant éloigné de la problématique de détection de sur-remplissage.

Le document de brevet US 5,103,648 a trait à un dispositif de mesure de contrôle du niveau d'huile de compresseurs de systèmes de réfrigération. Le dispositif prévoit d'émettre une alarme lorsque le niveau dépasse une limite supérieure. Tout comme l'enseignement précédent, cet enseignement est éloigné de la problématique de détection de sur-remplissage liée à une machine ou un moteur sujet au phénomène de « gulping ».

### Résumé de l'invention

### Problème technique

L'invention a pour objectif de proposer une solution au problème de sur-remplissage d'un système de lubrification, notamment pour des moteurs sujets au phénomène de « gulping ». Plus particulièrement, l'invention a pour objectif de proposer une solution au problème de sur-remplissage d'un système de lubrification de moteur, notamment de moteur à réaction d'aéronef, la solution devant être simple, peu coûteuse et fiable.

### Solution technique

L'invention a pour objet une unité de contrôle de niveau d'huile d'un système de lubrification d'un moteur, préférentiellement d'un moteur d'aéronef, le système de lubrification comprenant un réservoir, l'unité comprenant: une première entrée apte à recevoir un signal de niveau haut d'un capteur de niveau d'huile dans le réservoir; une sortie apte à produire un signal d'alarme de sur remplissage en présence d'une première condition comprenant la réception par la première entrée du signal de niveau haut du capteur; remarquable en ce que l'unité de contrôle comprend une deuxième entrée apte à recevoir un signal de fonctionnement du moteur, et est configurée de manière à ce qu'une deuxième condition soit nécessaire pour produire le signal d'alarme de sur remplissage en présence du signal de niveau haut du capteur, la deuxième condition comprenant le fait que le moteur soit en fonctionnement.

Cette deuxième condition implique, pour un moteur en bon état, une baisse sensible du niveau suite au phénomène de « gulping », ce qui rend la détection particulièrement efficace, car elle repose sur l'impossibilité d'avoir un réservoir proche de 100% de sa capacité et un moteur en régime.

Préférentiellement, la deuxième condition se limite au fait que le moteur soit en fonctionnement.

Selon un mode avantageux de l'invention, la première condition requiert la réception du signal de niveau haut du capteur durant une période donnée.

Selon un autre mode avantageux de l'invention, la première condition requiert la réception du signal de niveau haut du capteur de manière continue durant la période donnée.

Selon un encore autre mode avantageux de l'invention, la période est supérieure à 5 secondes, préférentiellement 10 secondes, plus préférentiellement 20 secondes. La période est préférentiellement inférieure ou égale à 60 secondes, plus préférentiellement 50 secondes, plus préférentiellement encore 40 secondes.

Selon un encore autre mode avantageux de l'invention, la deuxième condition comprend le fait que le moteur soit en fonctionnement durant la période de réception du signal de niveau haut.

La condition de fonctionnement du moteur correspond préférentiellement à un régime supérieur ou égal à 50%, plus préférentiellement 75%, du régime de ralenti du moteur. Cette condition peut également correspondre à un régime supérieur ou égal à 50% du régime maximum du moteur.

Selon un encore autre mode avantageux de l'invention, l'unité de contrôle comprend une troisième entrée apte à recevoir un signal de niveau haut d'un capteur de niveau supplémentaire, la première condition comprenant la réception par la première entrée et par la troisième entrée des signaux de niveau haut respectifs. Le capteur de niveau supplémentaire peut être du type apte à détecter un seul niveau.

L'invention a également pour objet un système de lubrification d'un moteur, notamment d'un moteur d'aéronef, le système de lubrification comprenant: un réservoir destiné à contenir de l'huile; un capteur de niveau haut de l'huile dans le réservoir; une unité de contrôle du niveau d'huile du système de lubrification; remarquable en ce que l'unité de contrôle est conforme à l'invention.

Selon un autre mode avantageux de l'invention, le réservoir comprend à une partie haute située au-dessus du niveau haut une évacuation d'air destinée à être raccordée à une enceinte du moteur.

L'invention a également pour objet un moteur équipé d'un système de lubrification, caractérisée en ce que ledit système est conforme à l'invention.

Selon un mode avantageux de l'invention, le moteur est tel qu'il absorbe une fraction du volume d'huile du système de lubrification lorsqu'il est en fonctionnement, ladite fraction d'huile revenant dans le réservoir lorsqu'il est à l'arrêt. La fraction d'huile est préférentiellement comprise entre 10% et 50% du volume d'huile total, plus préférentiellement comprise entre 20% et 40% du volume d'huile total. La fraction d'huile consommée temporairement lors du fonctionnement du moteur dépend de son régime, plus particulièrement de manière croissante avec le régime moteur.

L'invention a également pour objet un procédé de contrôle de niveau d'huile d'un système de lubrification d'un moteur, préférentiellement d'un moteur d'aéronef, le système de lubrification comprenant un réservoir, le procédé comprenant les étapes suivantes: (a) surveillance du niveau d'huile dans le réservoir par rapport à un niveau haut; (b) émission d'un signal d'alarme de sur remplissage en présence d'une première condition correspondant à un niveau de l'huile dans le réservoir supérieur ou égal au niveau haut; remarquable en ce que l'étape (b) comprend une deuxième condition nécessaire pour produire le signal d'alarme de sur remplissage, la deuxième condition comprenant le fait que le moteur soit en fonctionnement.

Selon un mode avantageux de l'invention, la première condition requiert que le niveau d'huile soit supérieur ou égal au niveau haut durant une période donnée.

Selon un autre mode avantageux de l'invention, la période est supérieure à 5 secondes, préférentiellement 10 secondes, plus préférentiellement 20 secondes. La période est préférentiellement inférieure ou égale à 60 secondes, plus préférentiellement 50 secondes, plus préférentiellement encore 40 secondes.

### Avantages apportés

Les mesures de l'invention permettent d'assurer une fonction d'alarme robuste et apte à prévenir une surpression et/ou un débordement du réservoir. Elles permettent en fait de détecter les conditions d'un débordement bien avant que ce dernier arrive. Les mesures de l'invention sont simples, peu coûteuses et faciles à mettre en oeuvre. Le positionnement du niveau haut à détecter au-dessus du niveau normal lors du fonctionnement du moteur permet de rendre la mesure robuste en évitant des fausses détections lors de variations normales du niveau par rapport au niveau normal.

### Brève description des dessins

La figure 1 est une illustration schématique d'un système de lubrification d'un moteur d'aéronef, conforme à l'invention.
La figure 2 est une illustration détaillée du réservoir d'huile et de l'unité de contrôle du système de lubrification de la figure 1.
La figure 3 est un logigramme illustrant le principe de fonctionnement de l'unité de contrôle conforme à l'invention.
La figure 4 est une illustration de l'état du réservoir d'huile du système de lubrification, dans une situation normale de fonctionnement du moteur.
La figure 5 est une illustration de l'état du réservoir d'huile du système de lubrification, dans une situation normale où le moteur est à l'arrêt.
La figure 6 est une illustration de l'état du réservoir d'huile du système de lubrification, dans une situation de débordement en l'absence de détection de sur-remplissage selon l'invention.
La figure 7 est une illustration de l'état du réservoir d'huile du système de lubrification, dans une situation de sur-remplissage détectée conformément à l'invention.

### Description des modes de réalisation

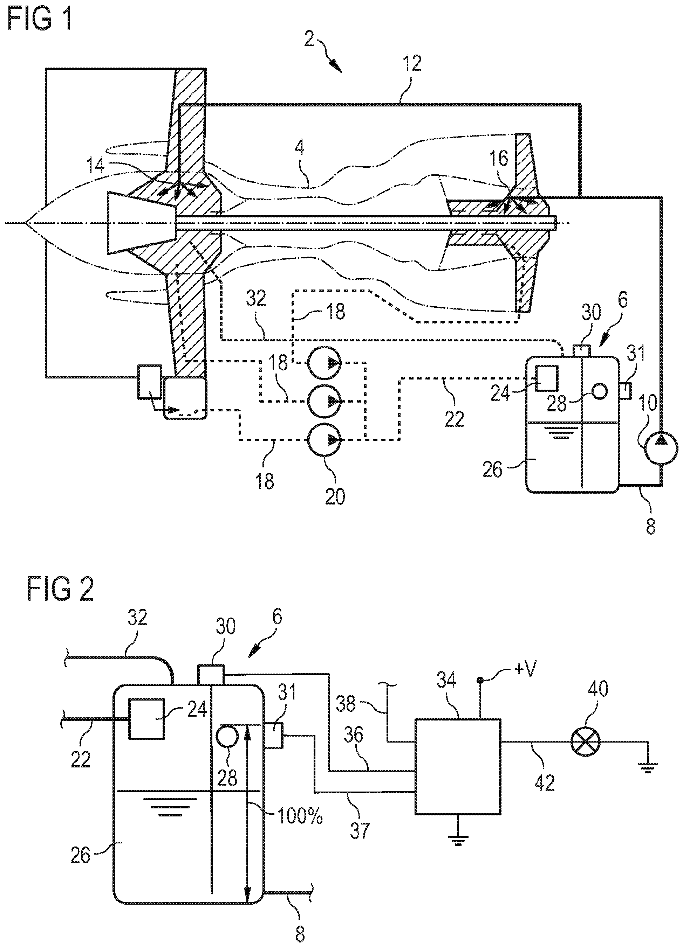

A la figure 1 est illustré un système de lubrification d'un moteur d'aéronef 4. Le système de lubrification 2 comprend essentiellement un réservoir d'huile 6, une conduite de sortie 8 reliée à une pompe d'alimentation 10. Des conduites 12 acheminent l'huile déplacée par la pompe de lubrification vers différentes enceintes de paliers à lubrifier 14 et 16 aux parties avant et arrière du moteur 4. L'huile est ensuite récupérée au fond de ces enceintes par des conduites 18 de récupération ainsi que par une ou des pompes de récupération 20. Cette huile chargée d'air est ensuite réacheminée via la conduite 22 vers le réservoir 6. Ce dernier comprend une enceinte 26 avec un séparateur air/huile 24 disposé à une partie haute de l'enceinte 26 et connecté à la conduite de retour d'huile 22. Le réservoir 6 comprend également une fenêtre de contrôle visuelle 28 du niveau normal, d'un détecteur de niveau 30 ainsi qu'un détecteur de niveau complémentaire 31. Le détecteur de niveau 30 peut comprendre un flotteur monté mobile le long d'une tige plongeant dans le réservoir, le flotteur comprenant une partie aimantée interagissant avec des interrupteurs du type « reed » répartis le long de la tige. le détecteur de niveau complémentaire 31 peut être du type discret, c'est-à-dire apte à détecter un seul niveau, à savoir un niveau haut. La partie haute de l'enceinte 26 du réservoir 6 est également reliée via une conduite 32 à une ou plusieurs enceintes 14 et 16 du moteur, et ce afin de permettre l'évacuation de l'air des pompes de récupération, cet air étant alors séparé de l'huile.

Les pompes d'alimentation et de récupération 10 et 20 sont préférentiellement du type volumétrique et entrainées par l'arbre principal du moteur. Lorsque le moteur est arrêté, l'huile présente dans les enceintes de lubrification et les conduites d'alimentation et de récupération revient vers le réservoir 6.

La figure 2 illustre le réservoir 6 du système de lubrification 2 ainsi qu'une unité de contrôle 34 de niveau d'huile dudit système. L'unité de contrôle 34 est alimentée électriquement et comprend une première entrée 36 connectée à la sortie du capteur de niveau 30 du réservoir. L'unité de contrôle 34 comprend également une deuxième entrée 38 connectée à un émetteur de signal de fonctionnement du moteur. Elle peut comprendre une troisième entrée 37 connectée au capteur niveau complémentaire 31. Cette troisième entrée permet d'avoir une redondance de l'information de niveau haut du réservoir et par conséquent une plus grande fiabilité. Elle comprend une sortie apte à produire un signal de commande d'une alarme 40. Cette dernière peut être lumineuse, sonore, ou de toute autre sorte courante.

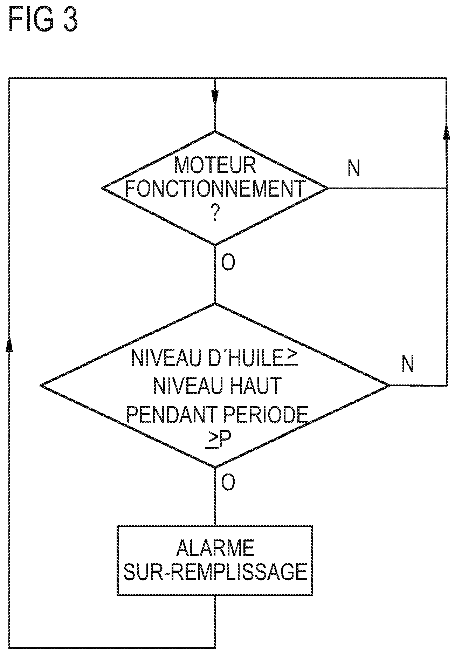

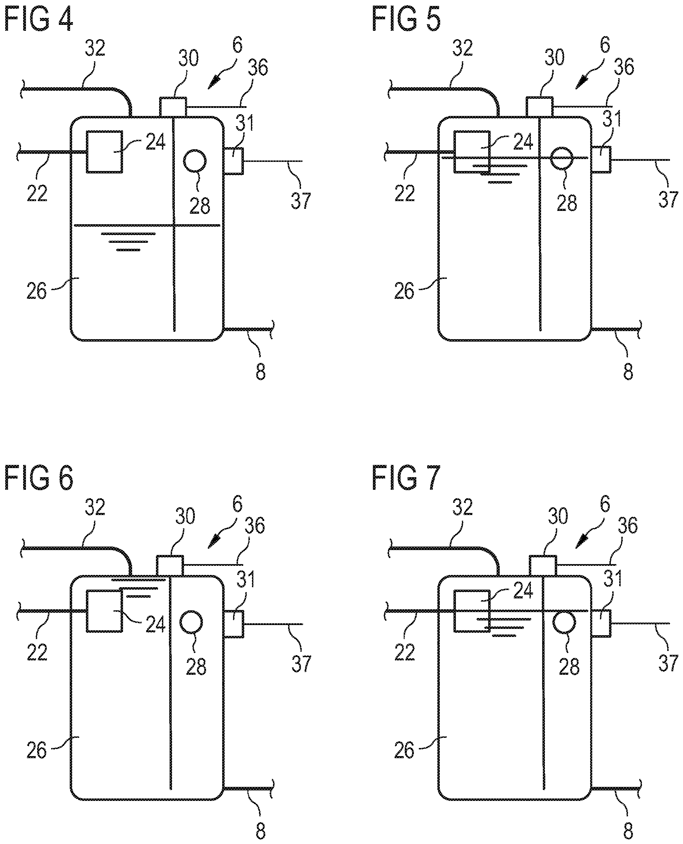

La figure 3 illustre la logique de fonctionnement de l'unité de contrôle de niveau d'huile du système de lubrification. L'unité de contrôle vérifie que deux conditions soient remplies avant de produire un signal d'alarme de sur-remplissage. Elle vérifie que le moteur soit en fonctionnement et que le niveau d'huile soit supérieur ou égal au niveau haut, et ce durant une période donnée P. En effet, c'est uniquement lors du fonctionnement du moteur que la mesure de sur-remplissage est significative, comme cela va être expliqué plus en détails en relation avec les figures 4 à 7. De plus, le fait d'observer la présence du signal de niveau haut sur une période donnée permet de rendre la mesure plus robuste à d'éventuelles variations de niveau temporaire, comme par exemple suite aux vibrations, inversions de gravité (trous d'air), et des manoeuvres brutales de l'aéronef. Cette période donnée peut être de l'ordre de quelques secondes ainsi que de l'ordre de quelques minutes. Préférentiellement cette période est comprise entre 10 et 60 secondes.

La figure 4 illustre le réservoir dans une situation normale de fonctionnement du moteur. Une fraction de l'huile du système de lubrification est située dans le moteur et les canalisations. Le niveau d'huile au sein de l'enceinte 26 du réservoir 6 correspond à une fraction du volume de l'enceinte. Dans le cas précis de l'exemple de la figure 4, il s'agit d'un niveau correspondant environ à 50% de la capacité de l'enceinte, étant entendu que cette valeur est donnée à titre d'exemple uniquement. Les détecteurs de niveau 30 et 31 ne produisent pas de signal de détection de niveau haut.

La figure 5 illustre le réservoir dans une situation normale où le moteur est arrêté. En s'arrêtant, le moteur permet à l'huile présente dans les canalisations et dans les enceintes des paliers à lubrifier de retourner vers le réservoir. Le niveau de ce dernier est sensiblement plus élevé que celui de la figure 4 lorsque le moteur est en fonctionnement. Le niveau est cependant légèrement inférieur au niveau haut correspondant à 100% de la capacité du réservoir. Tout comme dans la configuration de la figure 4, les détecteurs de niveau 30 et 31 ne produisent pas de signal de détection de niveau haut.

La figure 6 illustre le réservoir dans une situation de débordement qui est précisément une situation que l'on désire éviter. Pour diverses raisons, comme le passage de carburant dans l'huile mentionné précédemment (« Fuel-in-Oil ») ou comme un simple sur-remplissage, la quantité d'huile présente dans le système de lubrification est trop importante dans la mesure où l'enceinte 26 du réservoir est totalement ou presque totalement remplie et une partie de l'huile s'écoule par la conduite 32 d'évacuation des vapeurs vers une enceinte du moteur. Cette situation peut arriver lorsque le moteur fonctionne tout comme à l'arrêt de ce dernier. L'écoulement d'huile de surplus vers une enceinte du moteur peut avoir de graves conséquences lors du fonctionnement de ce dernier. La présence d'huile dans une telle enceinte peut éventuellement occasionner des dégâts par contamination de certaines parties du moteur ainsi que par combustion non contrôlée, voire encore causer un incendie au niveau du moteur.

La figure 7 illustre le réservoir dans une situation de sur-remplissage détecté par le système de lubrification de l'invention. En effet, le niveau a atteint ou dépassé le niveau haut, et ce de manière continue sur une période donnée ou interrompue mais de manière récurrence sur ladite période lorsque le moteur fonctionne. Cette détection signifie que le réservoir sera susceptible de déborder. Le signal d'alarme permettra alors aux pilotes de l'aéronef et/ou au personnel d'entretien de prendre les mesures nécessaires.

## Revendications

1. Unité de contrôle (34) de niveau d'huile d'un système de lubrification (2) d'un moteur, préférentiellement d'un moteur d'aéronef (4), le système de lubrification (2) comprenant un réservoir (6), l'unité (34) comprenant :
une première entrée (36) apte à recevoir un signal de niveau haut d'un capteur de niveau (30) d'huile dans le réservoir (6) ;
une sortie (42) apte à produire un signal d'alarme (40) de sur remplissage en présence d'une première condition comprenant la réception par la première entrée (36) du signal de niveau haut du capteur (30) ;
**caractérisé en ce que**
l'unité de contrôle (34) comprend au moins une deuxième entrée (38) apte à recevoir un signal que le moteur est en fonctionnement, et est configurée de manière à ce qu'une deuxième condition soit nécessaire pour produire le signal d'alarme (40) de sur remplissage, la deuxième condition comprenant la réception par la deuxième entrée (38) du signal que le moteur (4) est en fonctionnement.

2. Unité de contrôle (34) selon la revendication 1, **caractérisée en ce que** la première condition requiert la réception du signal de niveau haut du capteur (30) durant une période donnée.

3. Unité de contrôle (34) selon la revendication 2, **caractérisée en ce que** la première condition requiert la réception du signal de niveau haut du capteur (30) de manière continue durant la période donnée.

4. Unité de contrôle (34) selon l'une des revendications 2 et 3, **caractérisée en ce que** la période est supérieure à 5 secondes, préférentiellement 10 secondes, plus préférentiellement 20 secondes.

5. Unité de contrôle (34) selon l'une des revendications 2 à 4, **caractérisée en ce que** la période est inférieure à 60 secondes, préférentiellement 50 secondes, plus préférentiellement 40 secondes.

6. Unité de contrôle (34) selon l'une des revendications 2 à 5, **caractérisé en ce que** la deuxième condition comprend le fait que le moteur (4) soit en fonctionnement durant la période de réception du signal de niveau haut.

7. Unité de contrôle (34) selon l'une des revendications 1 à 6, **caractérisée en ce qu'**elle comprend une troisième entrée apte à recevoir un signal de niveau haut d'un capteur de niveau supplémentaire (31), la première condition comprenant la réception par la première entrée (36) et par la troisième entrée (37) des signaux de niveau haut respectifs.

8. Système de lubrification (2) d'un moteur, notamment d'un moteur d'aéronef (4), le système de lubrification comprenant :
un réservoir (6) destiné à contenir de l'huile ;
un capteur de niveau haut (30) de l'huile dans le réservoir ;
une unité de contrôle (34) du niveau d'huile du système de lubrification ;
**caractérisé en ce que**
l'unité de contrôle (34) est conforme à l'une des revendications 1 à 7.

9. Système de lubrification selon la revendication 8, **caractérisé en ce que** le réservoir (6) comprend à une partie haute située au-dessus du niveau haut une évacuation d'air (32) destinée à être raccordée à une enceinte du moteur (4).

10. Moteur (4) équipé d'un système de lubrification (2), **caractérisée en ce que** ledit système est conforme à l'une des revendications 8 et 9.

11. Moteur (4) selon la revendication 10, **caractérisée en ce que** le moteur est tel qu'il absorbe une fraction du volume d'huile du système de lubrification (2) lorsqu'il est en fonctionnement, ladite fraction d'huile revenant dans le réservoir (6) lorsqu'il est à l'arrêt.

12. Procédé de contrôle de niveau d'huile d'un système de lubrification (2) d'un moteur, préférentiellement d'un moteur d'aéronef (4), le système de lubrification (2) comprenant un réservoir (6), le procédé comprenant les étapes suivantes :
(a) surveillance du niveau d'huile dans le réservoir (6) par rapport à un niveau haut ;
(b) émission d'un signal d'alarme de sur remplissage en présence d'une première condition correspondant à un niveau de l'huile dans le réservoir (6) supérieur ou égal au niveau haut ;
**caractérisé en ce que**
l'étape (b) comprend une deuxième condition nécessaire pour produire le signal d'alarme de sur remplissage, la deuxième condition comprenant le fait que le moteur (4) soit en fonctionnement.

13. Procédé selon la revendication 12, **caractérisé en ce que** la première condition requiert que le niveau d'huile soit supérieur ou égal au niveau haut durant une période donnée.

14. Procédé selon la revendication 13, **caractérisé en ce que** la période est supérieure à 5 secondes, préférentiellement 10 secondes, plus préférentiellement 20 secondes.

15. Procédé selon l'une des revendications 13 et 14, **caractérisé en ce que** la période est inférieure à 60 secondes, préférentiellement 50 secondes, plus préférentiellement 40 secondes.

## Patentansprüche

1. Kontrolleinheit (34) für den Ölstand eines Schmiersystems (2) eines Motors, vorzugsweise eines Flugzeugmotors (4), wobei das Schmiersystem (2) einen Tank (6) beinhaltet und die Kontrolleinheit (34) Folgendes beinhaltet:
einen ersten Eingang (36), der in der Lage ist ein Signal für den oberen Pegelstand von einem Ölpegelsensor (30) im Tank (6) zu empfangen;
einen Ausgang (42), der geeignet ist, ein Alarmsignal (40) bezüglich des Füllgrades zu erzeugen, wenn eine erste Bedingung gegeben ist, die den Empfang des Signals für den oberen Pegelstand des Sensors (30) vom ersten Eingang (36) beinhaltet;
**dadurch gekennzeichnet, dass**
die Kontrolleinheit (34) mindestens einen zweiten Eingang (38) beinhaltet, der in der Lage ist, ein Signal zu empfangen, dass der Motor in Betrieb ist und in der Weise konfiguriert ist, dass eine zweite Bedingung notwendig ist, um das Alarmsignal (40) bezüglich des Füllgrades zu erzeugen, wobei die zweite Bedingung den Empfang des Signals, dass der Motor (4) in Betrieb ist, durch den zweiten Eingang (38) beinhaltet.

2. Kontrolleinheit (34) nach Anspruch 1, **dadurch gekennzeichnet, dass** die erste Bedingung den Empfang des Signals für den oberen Pegelstand des Sensors (30) während eines gegebenen Zeitraums erfordert.

3. Kontrolleinheit (34) nach Anspruch 2, **dadurch gekennzeichnet, dass** die erste Bedingung den Empfang des Signals für den oberen Pegelstand des Sensors (30) kontinuierlich während des gegebenen Zeitraums erfordert.

4. Kontrolleinheit (34) nach einem der Ansprüche 2 und 3, **dadurch gekennzeichnet, dass** der Zeitraum mehr als 5 Sekunden, vorzugsweise 10 Sekunden, noch bevorzugter 20 Sekunden beträgt.

5. Kontrolleinheit (34) nach einem der Ansprüche 2 bis 4, **dadurch gekennzeichnet, dass** der Zeitraum weniger als 60 Sekunden, vorzugsweise 50 Sekunden, noch bevorzugter 40 Sekunden beträgt.

6. Kontrolleinheit (34) nach einem der Ansprüche 2 bis 5, **dadurch gekennzeichnet, dass** die zweite Bedingung die Tatsache beinhaltet, dass der Motor (4) während des Zeitraums für den Empfang des Signals für den oberen Pegelstand in Betrieb ist.

7. Kontrolleinheit (34) nach einem der Ansprüche 1 bis 6, **dadurch gekennzeichnet, dass** sie einen dritten Eingang beinhaltet, der geeignet ist, ein Signal für den oberen Pegelstand eines zusätzlichen Pegelsensor (31) zu empfangen, wobei die erste Bedingung den Empfang der jeweiligen Signale für den oberen Pegelstand durch den ersten Eingang (36) und den dritten Eingang (37) beinhaltet.

8. Schmiersystem (2) eines Motors, insbesondere eines Flugzeugmotors (4), wobei das Schmiersystem Folgendes beinhaltet:
einen Tank (6), der dazu bestimmt ist, um Öl zu enthalten;
einen Sensor für den oberen Pegelstand (3) des Öls im Tank;
eine Kontrolleinheit (34) für den Ölstand des Schmiersystems;
**dadurch gekennzeichnet, dass**
die Kontrolleinheit (34) einem der Ansprüche 1 bis 7 entspricht.

9. Schmiersystem nach Anspruch 8, **dadurch gekennzeichnet, dass** der Tank (6) in einem oberen Teil oberhalb des oberen Pegelstands einen Luftauslass (32) beinhaltet, der dazu bestimmt ist, um an einen Raum des Motors (4) angeschlossen zu werden.

10. Motor (4) mit einem Schmiersystem (2), **dadurch gekennzeichnet, dass** das genannte System einem der Ansprüche 8 und 9 entspricht.

11. Motor (4) nach Anspruch 10, **dadurch gekennzeichnet, dass** der Motor so ausgelegt ist, dass er einen Bruchteil des Ölvolumens des Schmiersystems (2) absorbiert, wenn er in Betrieb ist, wobei der genannte Ölbruchteil in den Tank (6) zurückkehrt, wenn er abgeschaltet ist.

12. Verfahren für die Kontrolle des Ölstands eines Schmiersystems (2) eines Motors, vorzugsweise eines Flugzeugmotors (4), wobei das Schmiersystem (2) einen Tank (6) beinhaltet und das Verfahren die folgenden Phasen beinhaltet:
(a) Überwachung des Ölstands im Tank (6) im Verhältnis zu einem oberen Pegelstand;
(b) Absendung eines Alarmsignals bezüglich des Füllgrades, wenn eine erste Bedingung erfüllt ist, die einem Ölstand im Tank (6) entspricht, der höher ist als der obere Pegelstand oder diesem entspricht;
**dadurch gekennzeichnet, dass**
die Phase (b) eine zweite notwendige Bedingung für die Erzeugung des Alarmsignals bezüglich des Füllgrades beinhaltet, wobei die zweite Bedingung die Tatsache beinhaltet, dass der Motor (4) in Betrieb ist.

13. Verfahren nach Anspruch 12, **dadurch gekennzeichnet, dass** die erste Bedingung es erforderlich macht, dass der Ölstand währen eines gegebenen Zeitraums höher ist, als der obere Pegelstand oder diesem entspricht.

14. Verfahren nach Anspruch 13, **dadurch gekennzeichnet, dass** der Zeitraum mehr als 5 Sekunden, vorzugsweise 10 Sekunden, noch bevorzugter 20 Sekunden beträgt.

15. Verfahren nach einem der Ansprüche 13 und 14, **dadurch gekennzeichnet, dass** der Zeitraum weniger als 60 Sekunden, vorzugsweise 50 Sekunden, noch bevorzugter 40 Sekunden beträgt.

## Claims

1. A unit (34) for monitoring the oil level of an engine lubrication system (2), preferably that of an aircraft engine (4), the lubrication system (2) comprising a tank (6), the unit (34) comprising:
a first input (36) capable of receiving a high oil level signal from an oil level sensor (30) in the tank (6);
an output (42) capable of generating an overfilling alarm signal (40) when a first condition is satisfied comprising receiving a high oil level signal from the sensor (30) on the first input (36);
**characterized in that**
the monitoring unit (34) comprises at least a second input (38) capable of receiving a signal indicating the engine is running, and is configured so that a second condition is satisfied to produce an overfilling alarm signal (40), the second condition comprising receiving from the second input (38) a signal indicating the engine (4) is running.

2. Monitoring unit (34) according to claim 1, **characterized in that** the first condition requires the receipt of the high oil level signal from the sensor (30) over a given period.

3. Monitoring unit (34) according to claim 2, **characterized in that** the first condition requires the receipt of the high oil level signal from the sensor (30) continuously over the given period.

4. Monitoring unit (34) according to one of claims 2 and 3, **characterized in that** the period is greater than 5 seconds, preferably 10 seconds, more preferably 20 seconds.

5. Monitoring unit (34) according to one of claims 2 to 4, **characterized in that** the period is less than 60 seconds, preferably 50 seconds, more preferably 40 seconds.

6. Monitoring unit (34) according to one of claims 2 to 5, **characterized in that** the second condition comprises the fact that the engine (4) is running while the high oil level signal is being received.

7. Monitoring unit (34) according to one of claims 1 to 6, **characterized in that** the monitoring unit comprises a third input capable of receiving a high oil level signal from a supplementary level sensor (31), wherein the first condition comprises receiving high oil level signals from both the first (36) and the third (37) sensors respectively.

8. A lubrication system (2) of an engine, particularly an aircraft engine, the system comprising;
a tank (6) for containing oil;
a sensor (30) of a high oil level in the tank;
a unit (34) for monitoring the oil level of the lubrication system;
**characterized in that**
the monitoring unit (34) is according to one of claims 1 to 7.

9. A lubrication system according to claim 8, **characterized in that** the tank (6) comprises a top portion located above its highest fluid level, containing an air outlet (32) for connection to a housing of the engine (4).

10. Engine (4) equipped with a lubrication system (2), **characterized in that** the said system is in accordance with one of claims 8 and 9.

11. Engine (4) according to claim 10, **characterized in that** the engine is such that it absorbs a fraction of the lubricating system's (2) volume of oil when in operation, the said oil fraction flowing back to the tank (6) when it is stopped.

12. Method for monitoring the oil level of a lubrication system (2) of an engine, preferably of an aircraft engine (4), the lubrication system (2) comprising a tank (6), the method comprising the following steps:
(a) monitoring the oil level in the tank (6) in relation to a high level;
(b) emitting an overfilling alarm signal in the presence of a first condition corresponding to an oil level in the tank (6) greater than or equal to the high level;
**characterized in that** step (b) comprises a second condition for generating the overfilling alarm signal, the second condition comprising the fact that the motor (4) is running.

13. A method according to claim 12, **characterized in that** the first condition requires the oil level is greater than or equal to the high level over a given period.

14. A method according to claim 13, **characterized in that** the period is greater than 5 seconds, preferably 10 seconds, more preferably 20 seconds.

15. A method according to one of claims 13 and 14, **characterized in that** the period is less than 60 seconds, preferably 50 seconds, more preferably 40 seconds.
